(19) **Europäisches Patentamt European Patent Office Office européen des brevets**

(11) **EP 4 407 757 B1**

(12) **EUROPEAN PATENT SPECIFICATION**

(45) Date of publication and mention of the grant of the patent:
**25.02.2026 Bulletin 2026/09**

(21) Application number: **21963604.0**

(22) Date of filing: **11.11.2021**

(51) International Patent Classification (IPC):
*H01M 50/10* (2021.01)        *H01M 50/209* (2021.01)
*H01M 50/172* (2021.01)       *H01M 50/502* (2021.01)
*H01M 50/548* (2021.01)       *H01M 50/50* (2021.01)
*H01M 50/55* (2021.01)        *H01M 50/553* (2021.01)
*H01M 50/566* (2021.01)

(52) Cooperative Patent Classification (CPC):
**H01M 50/553; H01M 50/10; H01M 50/172;
H01M 50/209; H01M 50/50; H01M 50/502;
H01M 50/548; H01M 50/55; H01M 50/566;
Y02E 60/10**

(86) International application number:
**PCT/CN2021/130127**

(87) International publication number:
**WO 2023/082151 (19.05.2023 Gazette 2023/20)**

(54) **BATTERY CELL, METHOD AND SYSTEM FOR MANUFACTURING BATTERY CELL, BATTERY AND ELECTRICAL APPARATUS**

BATTERIEZELLE UND HERSTELLUNGSVERFAHREN UND HERSTELLUNGSSYSTEM DAFÜR, BATTERIE UND ELEKTRISCHE VORRICHTUNG

ÉLÉMENT DE BATTERIE ET SYSTÈME ET PROCÉDÉ DE FABRICATION ASSOCIÉS, BATTERIE ET DISPOSITIF ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.07.2024 Bulletin 2024/31**

(73) Proprietor: **Contemporary Amperex Technology (Hong Kong) Limited
Central, Central And Western District (HK)**

(72) Inventor: **XU, Hu
Ningde, Fujian 352100 (CN)**

(74) Representative: **Gong, Jinping
CocreateIP
Neumarkter Straße 21
81673 München (DE)**

(56) References cited:
CN-A- 111 883 850        CN-U- 202 905 802
DE-A1- 102013 203 097    JP-A- 2003 100 271
JP-A- 2010 080 411       JP-A- H07 142 039

## Description

### TECHNICAL FIELD

The present application relates to a technical field of batteries, and in particular, to a battery cell, a method and a system for manufacturing a battery cell, a battery and an electrical apparatus as specified in the appended claim set.

### BACKGROUND

Battery cells are widely used in electrical devices, such as a mobile phone, a notebook computer, an electric bike, an electric vehicle, an electric plane, an electric ship, an electric toy vehicle, an electric toy ship, an electric toy plane, and an electric tool, and the like. The battery cell may include a nickel-cadmium battery cell, a nickel-hydrogen battery cell, a lithium ion battery cell, a secondary alkaline zinc-manganese battery cell, and the like.

In the development of battery technology, how to increase energy density is a research direction in the battery technology. DE 10 2013 203097 A1 describes a battery cell, a battery module and a vehicle thereof.

### SUMMARY

The present invention provides a battery cell, a method and a system for manufacturing the battery cell, a battery, and an electrical apparatus as specified in the appended claim set, which can increase energy density.

### BRIEF DESCRIPTION OF THE DRAWINGS

In order to illustrate technical solutions of embodiments of the present application more clearly, the drawings required for the embodiments of the present application will be briefly described. Obviously, the drawings described below are merely some embodiments of the present application. For a person skilled in the art, other drawings can also be obtained from these drawings without any inventive efforts.

Fig. 1 is a schematic structural view of a vehicle according to some embodiments of the present application.

Fig. 2 is an schematic exploded view of a battery according to some embodiments of the present application

Fig. 3 is a schematic front view of a battery cell according to some embodiments of the present application.

Fig. 4 is a schematic cross-sectional view of the battery cell shown in Fig. 3 along a direction A-A.

Fig. 5 is a schematic cross-sectional view of two battery cells after assembly shown in Fig. 3.

Fig. 6 is a schematic perspective view of a battery cell according to some other embodiments of the present application.

Fig. 7 is a schematic cross-sectional view of a battery cell according to yet some other embodiments of the present application.

Fig. 8 is a schematic perspective view of a battery cell according to yet some other embodiments of the present application.

Fig. 9 is a schematic side view of a battery cell shown in Fig. 8.

Fig. 10 is a schematic front view of a battery cell according to some other embodiments of the present application.

Fig. 11 is a schematic perspective view of two battery cells after assembly shown in Fig. 10.

Fig. 12 is a schematic cross-sectional view of a battery cell shown in Fig. 3 along a direction B-B.

Fig. 13 is a schematic flowchart of a method for manufacturing a battery cell according to some embodiments of the present application.

Fig. 14 is a schematic block diagram of a system for manufacturing a battery cell according to some embodiments of the present application.

In the drawings, the drawings are not drawn according to actual scale.

### DETAILED DESCRIPTION

In order to make the purposes, technical solutions and advantages of embodiments of the present application more clear, the technical solutions of the embodiments of the present application will be described clearly in conjunction with the drawings in the embodiments of the present application. Obviously, the described embodiments are a part of the embodiments of the present application, but not all of the embodiments. Based on the embodiments in the present application, all other embodiments obtained by those ordinary skilled in the art without any creative work shall fall within the protection scope of the present application.

Unless otherwise defined, all technical and scientific terms used in the present application have the same meanings as commonly understood by those skilled in the technical field of the present application. In the present application, the terms used in the description of the present application are only for purposes of description of specific embodiments, and are not intended to limit the present application. The terms "comprising" and "having" in the description and claims of the present application and the above brief description of the drawings and any variations thereof are intended to cover non-exclusive inclusions. The terms "first", "second" and the like in the description and claims or the above brief description of the drawings of the present application are used to distinguish different objects, rather than to describe a specific order or primary and secondary relationship.

Reference to "an embodiment" in the present application means that a particular feature, structure or characteristic described in connection with the embodiment may be included in at least one embodiment of the present application. Appearances of the phrase in various places in the description are not necessarily all referring to the same embodiment, nor a separate or alternative embodiment that is mutually exclusive of other embodiments.

In the description of the present application, it should be noted that, unless otherwise expressly specified and limited, the terms "installed", "connected", "connection" and "attached" should be understood in a broad sense, for example, they may refer to a fixed connection, a detachable connection or an integral connection, which may be a direct connection, an indirect connection via an intermediate medium, or an internal communication between two elements. For those of ordinary skill in the art, the specific meanings of the above-mentioned terms in the present application can be understood in accordance with specific conditions.

Term "and/or" in the present application is only a kind of association relationship that describes associated objects, which indicates three possible kinds of relationships. For example, A and/or B may indicate the following three cases: A exists alone, A and B exist simultaneously, and B exists alone. In addition, the character "/" in the present application generally indicates that the associated objects have an "or" relationship.

In the embodiments of the present application, the term "parallel" includes not only the case of being absolutely parallel, but also the case of being approximately parallel in the conventional knowledge of engineering. Similarly, the term "perpendicular" includes not only the case of being absolutely perpendicular, but also the case of being approximately perpendicular in the conventional knowledge of engineering.

In the embodiments of the present application, the same reference numerals denote the same components, and for brevity, in different embodiments, detailed descriptions of the same components are omitted. It should be understood that sizes, such as a thickness, a length and a width, and the like of various components in the embodiments of the present application shown in the drawings, as well as an overall thickness, a length and a width, and the like of an integrated device are only exemplary descriptions, and should not constitute any limitation to the present application.

The "plurality" that appears in the present application refers to two or more (including two).

In the present application, a battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited in the embodiments of the present application.

A battery mentioned in the embodiments of the present application refers to a single physical module including one or more battery cells to provide a higher voltage and a higher capacity. For example, the battery mentioned in the present application may be a battery module, a battery pack, or the like. A battery typically includes a box body for enclosing one or more battery cells. The box body can prevent liquids or other foreign objects from affecting the charging or discharging of the battery cells.

A battery cell includes an electrode component and electrolyte, and the electrode component includes a first electrode plate, a second electrode plate and a separator. The operation of the battery cell mainly relies on a movement of metal ions between the first electrode plate and the second electrode plate. The first electrode plate includes a positive electrode current collector and a positive electrode active material layer, and the positive electrode active material layer is coated on a surface of the positive electrode current collector; the positive electrode current collector includes a positive electrode current collecting portion coated with the positive electrode active material layer and a positive electrode tab not coated with the positive electrode active material layer. Taking a lithium ion battery cell as an example, a material of the positive electrode current collector may be aluminum, the positive electrode active material layer includes a positive electrode active material. The positive electrode active material may be lithium cobalt oxide, lithium iron phosphate, ternary lithium or lithium manganate, and the like. The second electrode plate includes a negative electrode current collector and a negative electrode active material layer, and the negative electrode active material layer is coated on a surface of the negative electrode current collector; the negative electrode current collector includes a negative electrode current collecting portion coated with the negative electrode active material layer and a negative electrode tab not coated with the negative electrode active material layer. A material of the negative electrode current collector may be copper, the negative electrode active material layer includes a negative electrode active material, and the negative electrode active material may be carbon or silicon, and the like. A material of the separator may be PP (polypropylene), PE (polyethylene), or the like.

The battery cell further includes a housing and electrode terminals, the electrode component is accommodated within the housing, and the electrode terminals are installed within the housing and configured to be electrically connected to the electrode component, so that the electrical power of the electrode component may be derived .

With the development of battery technology, users' demand on capacity of the battery are increasing. For example, with increasing popularity of new energy vehicles, a demand for use of batteries in the new energy vehicles is becoming higher and higher. Users' demand for mileage of the new energy vehicles are constantly increasing, so that capacity of a battery used by the new energy vehicle needs to be increased continuously.

The battery includes the box body and a plurality of battery cells accommodated in the box body, the plurality of battery cells may be connected in series or in parallel or in a parallel-series connection, and a parallel-series connection means that the connections between the plurality of battery cells include a series connection and a parallel connection.

In the related art, the plurality of battery cells are electrically connected through a confluence component, and the electrode terminals generally protrude from the housing to facilitate connection with an external confluence component. However, the inventors have found that, the electrode terminals protruding from the housing increase a size of the battery cell and space in the box body occupied by the battery cell, and the confluence component also occupies space in the battery, which reduces a utilization rate of the space in the battery, thereby lowering the energy density of the battery. When the battery is assembled, the confluence component needs to be connected to the electrode terminals, which complicates a process for assembling the battery, thereby reducing an assembly efficiency.

In view of this, embodiments of the present application provide a technical solution in which a battery cell includes a housing, an electrode component, a first electrode terminal, and a second electrode terminal. An outer surface of the housing includes a first surface and a second surface oppositely arranged along a first direction, and two third surfaces oppositely arranged along a second direction, each of the third surfaces is connected to the first surface and the second surface, the housing is provided with a recess recessed relative to the first surface, and at least one end of the recess along the second direction extends to the third surface. The electrode component is accommodated within the housing. The first electrode terminal is configured to be electrically connected to the electrode component, and at least a part of the first electrode terminal is accommodated within the recess. The second electrode terminal is configured to be electrically connected to the electrode component and protrudes from the second surface, and the first electrode terminal and the second electrode terminal have opposite polarities. Under a condition that a plurality of battery cells are arranged along the first direction, the recess of the battery cell is configured to accommodate at least a part of a second electrode terminal of an adjacent battery cell, so that the first electrode terminal and the second electrode terminal accommodated within the recess are electrically connected. In this technical solution, space occupied by the first electrode terminal and the second electrode terminal is reduced by providing a recess on the housing to accommodate a first electrode terminal and a second electrode terminal of adjacent battery cells. The first electrode terminal and the second electrode terminal accommodated within the recess are connected to each other without using a conventional confluence bar, so as to simplify a process for assembling the battery, thereby improving a utilization rate of the space in the battery and increasing the energy density of the battery.

The technical solutions described in the embodiments of the present application are applicable to a battery and an electrical apparatus using a battery.

The electrical apparatus may be a vehicle, a mobile phone, a portable device, a notebook computer, a ship, a spacecraft, an electric toy, an electric tool, and the like. The vehicle may be a fuel vehicle, a gas vehicle or a new energy vehicle, and the new energy vehicle may be a pure electric vehicle, a hybrid vehicle or an extended-range vehicle, and the like; the spacecraft includes an airplane, a rocket, a space shuttle, a spacecraft, and the like; the electric toy includes a fixed or movable electric toy, such as a game console, an electric vehicle toy, an electric ship toy and an electric plane toy, and the like; the electric tool includes a metal-cutting electric tool, a grinding electric tool, an assembling electric tool and a railway electric tool, such as, an electric drill, an electric grinder, an electric wrench, an electric screwdriver, an electric hammer, an electric impact drill, a concrete vibrator and an electric planer, and the like. There is no special limitation on the above electrical apparatus in the embodiments of the present application.

In the following embodiments, for the convenience of description, the electrical apparatus is taken as a vehicle for illustration.

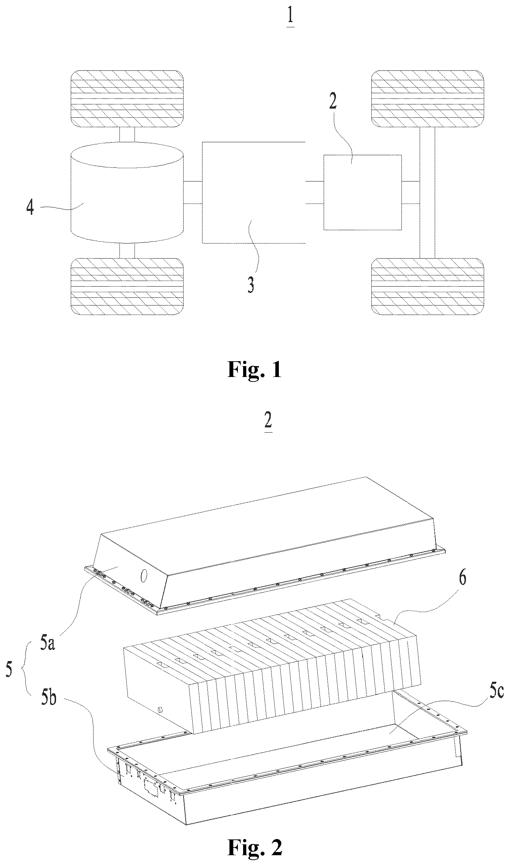

Fig. 1 is a schematic structural view of a vehicle according to some embodiments of the present application.

As shown in Fig. 1, a battery 2 is arranged inside a vehicle 1. The battery 2 may be arranged at the bottom or the head or the rear of the vehicle 1. The battery 2 may be used for supplying power to the vehicle 1, for example, the battery 2 may be used as a manipulating power source of the vehicle 1.

The vehicle 1 may further include a controller 3 and a motor 4. The controller 3 is configured to control the battery 2 to supply power to the motor 4, for example, for satisfying work power demands in the starting, navigating, and driving of the vehicle 1.

In some embodiments of the present application, the battery 2 may not only be used as the manipulating power source of the vehicle 1, but may also be used as a driving power source of the vehicle 1 to provide driving power for the vehicle 1 instead of or partially instead of fuel or natural gas.

Fig. 2 is an exploded schematic view of a battery according to some embodiments of the present application.

As shown in Fig. 2, the battery 2 includes a box body 5 and a battery cell 6 accommodated within the box body 5.

The box body 5 is used for accommodating the battery cell 6, and the box body 5 may be of various structures. In some embodiments, the box body 5 may include a first box body portion 5a and a second box body portion 5b. The first box body portion 5a and the second box body portion 5b may be covered by each other. The first box body portion 5a and the second box body portion 5b together define an accommodating space 5c for accommodating the battery cell 6. The second box body portion 5b may be a hollow structure with one open side. The first box body portion 5a is a plate-shaped structure. The first box body portion 5a covers the open side of the second box body portion 5b, so that the box body 5 having the accommodating space 5c is formed. Each of the first box body portion 5a and the second box body portion 5b may be a hollow structure with one open side, and the opening side of the first box body portion 5a covers the opening side of the second box body portion 5b, so that the box body 5 having the accommodating space 5c is formed. Of course, the first box body portion 5a and the second box body portion 5b may be in various shapes, such as a cylinder, a cuboid, and the like.

In order to improve an sealing performance after the first box body portion 5a and the second box body portion 5b are connected, a sealing member, such as sealant, a sealing ring, and the like, may be provided between the first box body portion 5a and the second box body portion 5b.

Assuming that the first box body portion 5a covers the top of the second box body portion 5b, the first box body portion 5a may be referred to as an upper box cover plate, and the second box body portion 5b may be referred to as a lower box body.

In the battery 2, there may be one such battery cell 6 or a plurality of such battery cells 6. Under a condition that there are a plurality of such battery cells 6, the plurality of battery cells 6 may be connected in series or in parallel or in a parallel-series connection, and a parallel-series connection means that the connections between the plurality of battery cells 6 include a series connection and a parallel connection.

The plurality of battery cells 6 may be directly connected in series or in parallel or in a parallel-series connection, and then an integrated body composed of the plurality of battery cells 6 is accommodated within the box body 5; of course, the plurality of battery cells 6 may be connected in series or in parallel or in a parallel-series connection to form a battery module, and a plurality of battery modules are connected in series or in parallel or in a parallel-series connection to form an integrated body and are accommodated within the box body 5.

In some embodiments, the integrated body of the battery cells 6 is directly installed on the housing 5. Accordingly, a process for forming the plurality of battery cells 6 into the battery module may omitted, and a fixing frame for fixing the battery cells 6 in the battery module may be eliminated, so that a structure of the battery can be simplified, thereby improving the energy density of the battery.

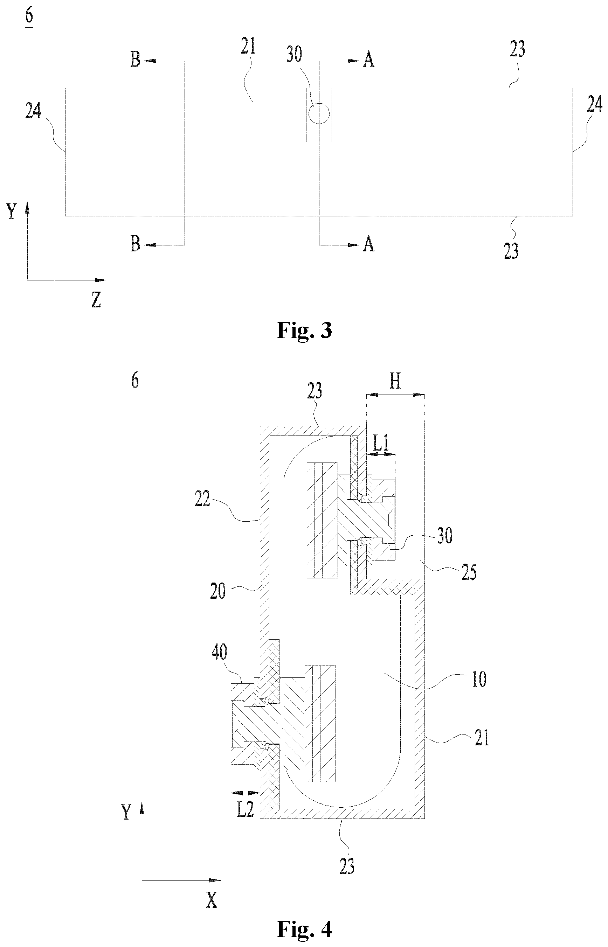

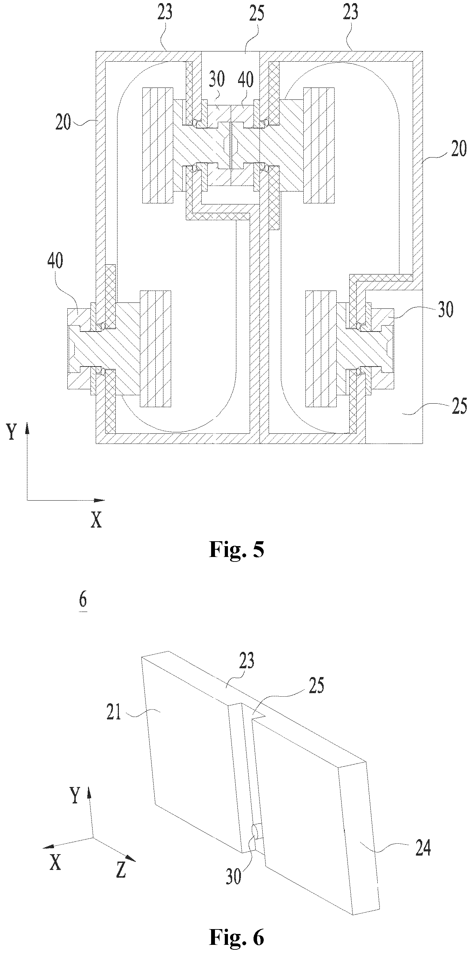

Fig. 3 is a schematic front view of a battery cell according to some embodiments of the present application; Fig. 4 is a schematic cross-sectional view of a battery cell shown in Fig. 3 along a direction A-A; Fig. 5 is a schematic cross-sectional view of two battery cells after assembly shown in Fig. 3.

As shown in Fig. 3 to Fig. 5, the battery cell 6 according to the embodiments of the present application includes an electrode component 10, a housing 20, a first electrode terminal 30, and a second electrode terminal 40. An outer surface of the housing 20 includes a first surface 21 and a second surface 22 oppositely arranged along a first direction X, and two third surfaces 23 oppositely arranged along a second direction Y, in which each of the third surfaces 23 is connected to the first surface 21 and the second surface 22, the housing 20 is provided with a recess 25 recessed relative to the first surface 21, and at least one end of the recess 25 along the second direction Y extends to the third surface 23. The electrode component 10 is accommodated within the housing 20. The first electrode terminal is configured to be electrically connected to the electrode component 10, in which at least a part of the first electrode terminal 30 is accommodated within the recess 25. The second electrode terminal 40 is configured to be electrically connected to the electrode component 10 and protrudes from the second surface 22, in which the first electrode terminal 30 and the second electrode terminal 40 have opposite polarities. Under a condition that a plurality of battery cells 6 are arranged along the first direction X, the recess 25 of the battery cell 6 is configured to accommodate at least a part of a second electrode terminal 40 of an adjacent battery cell 6, so that the first electrode terminal 30 and the second electrode terminal 40 accommodated within the recess 25 are electrically connected.

The electrode component 10 is a core component for the battery cell 6 to achieve a charging and discharging function, and includes a first electrode plate, a second electrode plate and a separator, the first electrode plate and the second electrode plate have opposite polarities, and the separator is used for insulating and separating the first electrode plate and the second electrode plate. The operation of the electrode component 10 mainly relies on a movement of metal ions between the first electrode plate and the second electrode plate.

One of the first electrode plate and the second electrode plate is a positive electrode plate, and the other of the first electrode plate and the second electrode plate is a negative electrode plate. In an example, the first electrode terminal 30 is electrically connected to the first electrode plate, and the second electrode terminal 40 is electrically connected to the second electrode plate. The first electrode terminal 30 and the second electrode terminal 40 are used to derive the electrical power of the electrode component 10.

There may be one electrode component 10 or a plurality of electrode components 10, which is not limited by the embodiment.

The housing 20 is a hollow structure, and an accommodating cavity for accommodating the electrode component 10 and the electrolyte is formed inside the housing 20. The housing 20 may be in various shapes, for example, a cylinder shape, a cuboid shape, and the like. The shape of the housing 20 may be determined according to the specific shape of the electrode component 10. For example, under a condition that the electrode component 10 is a cylinder structure, the housing 20 may be selected to be a cylindrical housing; under a condition that the electrode component 10 is a cuboid structure, the housing 20 may be selected to be a cuboid housing.

In an example, the first surface 21 and the second surface 22 are each a plane perpendicular to the first direction X, and the third surface 23 is a plane perpendicular to the second direction Y.

The first direction X intersects the second direction Y, and in some embodiments, the first direction X and the second direction Y are perpendicular to each other.

Two ends of the third surface 23 along the first direction X are connected to the first surface 21 and the second surface 22. Two ends of the third surface 23 may be directly connected to the first surface 21 and the second surface 22, or may be indirectly connected to the first surface 21 and the second surface 22 through other surfaces (for example, a circular arc surface).

At least one end of the recess 25 along the second direction Y extends to the third surface 23 to form an opening in the third surface 23.

The entire first electrode terminal 30 may be accommodated within the recess 25, or only a part of the first electrode terminal 30 may be accommodated within the recess 25. For example, a part of the first electrode terminal 30 may pass through a bottom of the recess 25 and extend into the housing 20 to achieve an electrical connection between the first electrode terminal 30 and the first electrode plate.

The first electrode terminal 30 may or may not protrude from the first surface 21.

The entire second electrode terminal 40 may protrude from the second surface 22, or only a part of the first electrode terminal 30 may protrude from the second surface 22. For example, a part of the second electrode terminal 40 may pass through the housing 20 and extend into the housing 20 to achieve an electrical connection between the second electrode terminal 40 and the second electrode plate.

Under a condition that the plurality of battery cells 6 are arranged along the first direction X, a first electrode terminal 30 and a second electrode terminals 40 of adjacent battery cells 6 are electrically connected to achieve a series connection between the battery cells 6. For example, for two adjacent battery cells 6, a recess 25 of one of the battery cells 6 is configured to accommodate at least a part of a second electrode terminal 40 of the other of the battery cells 6, and a first electrode terminal 30 and a second electrode terminal 40 accommodated within the recess 25 of the one of the battery cells 6 are electrically connected.

The first electrode terminal 30 and the second electrode terminal 40 accommodated within the recess 25 may be connected by welding, bonding, abutting, plugging or other means to achieve a series connection between the adjacent battery cells 6.

For the first electrode terminal 30 and the second electrode terminal 40 accommodated within the recess 25, the first electrode terminal 30 and the second electrode terminal 40 may be oppositely arranged along the first direction X or may be arranged along the second direction Y.

In the embodiment, space occupied by the first electrode terminal 30 and the second electrode terminal 40 is reduced by providing the recess 25 on the housing 20 to accommodate the first electrode terminal 30 and the second electrode terminal 40 of adjacent battery cells 6. The first electrode terminal 30 and the second electrode terminal 40 accommodated within the recess 25 are connected to each other without using the conventional confluence component, so as to simplify the process for assembling the battery, thereby improving the utilization rate of the space in the battery and increasing the energy density of the battery. At least one end of the recess 25 along the second direction Y extends to the third surface 23 to form an opening on the third surface 23, so that even if the opening of the recess 25 on the first surface 21 is blocked by an adjacent battery cell 6, an external device may be connected to the first electrode terminal 30 and the second electrode terminal 40 via the opening on the third surface 23, and therefore a connection strength between the first electrode terminal 30 and the second electrode terminal 40 is increased, thereby improving the assembling process.

In some embodiments, the battery includes the plurality of battery cells 6. The plurality of battery cells 6 are arranged along the first direction X, the recess 25 of the battery cell 6 is configured to accommodate at least a part of the second electrode terminal 40 of the adjacent battery cell 6, so that the first electrode terminal 30 and the second electrode terminal 40 accommodated within the recess 25 are electrically connected.

The first electrode terminal 30 and the second electrode terminal 40 accommodated within the recess 25 are welded to each other.

In the embodiment, a welding may reduce a contact resistance between the first electrode terminal 30 and the second electrode terminal 40, thereby improving the conveyance capacity.

In an example, an external welding device may inject laser light into the recess 25 through the opening on the third surface 23 and act on an intersection of the first electrode terminal 30 and the second electrode terminal 40 to connect the first electrode terminal 30 and the second electrode terminal 40.

In other embodiments, the first electrode terminal 30 and the second electrode terminal 40 accommodated within the recess 25 are connected by a conductive adhesive.

In the embodiment, an external adhesive injection device may extend into the recess 25 through the opening on the third surface 23 and apply an adhesive at an intersection of the first electrode terminal 30 and the second electrode terminal 40 to bond the first electrode terminal 30 and the second electrode terminal 40.

In some embodiments, along the first direction X, a size of a part of the first electrode terminal 30 protruding from a bottom surface of the recess 25 is L1, a size of a part of the second electrode terminal 40 protruding from the second surface 22 is L2, and a depth of the recess 25 is H, in which L1, L2, and H satisfy: $H \leq L1 + L2$.

In the embodiment, the first electrode terminal 30 and the second electrode terminal 40 accommodated within the recess 25 abut against each other along the first direction X, so that a contact area between the first electrode terminal 30 and the second electrode terminal 40 can be ensured, so as to improve a conveyance capacity, thereby simplifying a process for connecting the first electrode terminal 30 to the second electrode terminal 40.

In some embodiments, for two adjacent battery cells 6, a first surface 21 of one of the battery cells 6 may be directly bonded to a second surface 22 of the other of the battery cells 6.

In other embodiments, for two adjacent battery cells 6, a first surface 21 of one of the battery cells 6 is adhered to a second surface 22 of the other of the battery cells 6 by an adhesive layer. In some embodiments, L1, L2, L3, and H satisfy: $H=L1+L2+L3$. L3 is a thickness of the adhesive layer.

In some embodiments, an area of the first surface 21 is the same as an area of the second surface 22, and the first surface 21 and the second surface 22 are surfaces having a largest area among all surfaces of the housing 20.

The area of the first surface 21 is greater than an area of the third surface 23.

In some embodiments, the outer surface of the housing 20 further includes two fourth surfaces 24 oppositely arranged along a third direction Z, and the first direction X, the second direction Y, and the third direction Z are perpendicular to each other. The area of the first surface 21 is also greater than an area of the fourth surface 24.

In the embodiment, the first surface 21 and the second surface 22 are surfaces having a largest area among all surfaces of the housing 20, and under a condition that the plurality of battery cells 6 are arranged along the first direction X, an overall size of the plurality of battery cells 6 may be more uniform.

In some embodiments, a part of the first electrode terminal 30 positioned outside the housing 20 is completely accommodated within the recess 25.

In the embodiment, the first electrode terminal 30 does protrude from the outer surface of the housing 20 and does not additionally increase a size of the battery cell 6, thereby increasing the energy density of the battery cell 6. The first electrode terminal 30 does not interfere with a housing 20 of an adjacent battery cell 6, so that it is possible to reduce a distance between housings 20 of adjacent battery cells 6, thereby increasing the energy density.

In some embodiments, a projection of the first electrode terminal 30 along the first direction X does not overlap with a projection of the second electrode terminal 40 along the first direction X.

In the above description, the projection of the first electrode terminal 30 and the projection of the second electrode terminal 40 are projections within a same plane perpendicular to the first direction X.

In the embodiment, the first electrode terminal 30 and the second electrode terminal 40 may be staggered, so that it is possible to increase a distance between the first electrode terminal 30 and the second electrode terminal 40, and therefore space in the housing 20 is provided for a conductive structure connected to the first electrode terminal 30 and a conductive structure connected to the second electrode terminal 40, and a risk of overlapping of the conductive structures is reduced, thereby improving safety.

In some embodiments, the projection of the first electrode terminal 30 along the first direction X and the projection of the second electrode terminal 40 along the first direction X are spaced apart along the second direction Y.

In the embodiment, the projection of the first electrode terminal 30 and the projection of the second electrode terminal 40 are projections within the same plane perpendicular to the first direction X. In the plane, the projection of the first electrode terminal 30 and the projection of the second electrode terminal 40 are spaced apart by a predetermined distance along the second direction Y.

In the embodiment, a staggering of the first electrode terminal 30 and the second electrode terminal 40 along a third direction Z perpendicular to the first direction X and the second direction Y may be reduced, and the first electrode terminal 30 and the second electrode terminal 40 share same space along the third direction Z, so that the space occupied by the first electrode terminal 30 and the second electrode terminal 40 is reduced to effectively improve a utilization rate of the space, thereby increasing the energy density of the battery cell 6. In the embodiment, the plurality of battery cells 6 are connected in series and grouped, so that the first electrode terminal 30 and the second electrode terminal 40 of the adjacent battery cells 6 are connected to each other.

In some embodiments, the first electrode terminal 30 and the second electrode terminal 40 are installed in a middle region of the housing 20 along the third direction Z, and the first direction X, the second direction Y, and the third direction Z are perpendicular to each other.

In the embodiment, the first electrode terminal 30 and the second electrode terminal 40 can direct a current from a middle portion of the electrode component 10 along the third direction Z, so that a conductive path may be shortened, an internal resistance of the electrode component 10 and heat generated may be reduced, thereby improving a charging and discharging performance of the battery cell 6.

In some embodiments, along the third direction Z, a minimum distance between the first electrode terminal 30 and one of the fourth surfaces 24 is W1, and a minimum distance between the first electrode terminal 30 and the other of the fourth surfaces 24 is W2, and W1/W2 is equal to 0.9 to 1.1.

In some embodiments, along the third direction Z, a minimum distance between the second electrode terminal 40 and one of the fourth surfaces 24 is W3, and a minimum distance between the second electrode terminal 40 and the other of the fourth surfaces 24 is W4, and W3/W4 is equal to 0.9 to 1.1.

Fig. 6 is a schematic perspective view of a battery cell according to some other embodiments of the present application.

As shown in Fig. 6, two ends of the recess 25 along the second direction Y extend to the two third surfaces 23 respectively.

In the embodiment, the recess 25 penetrates through the housing along the second direction Y to form openings on two third surfaces 23.

In the embodiment, the two ends of the recess 25 along the second direction Y form openings on the two third surfaces 23, so that an external device (for example, a welding device) may be connected to the first electrode terminal 30 and the second electrode terminal via the openings on the two third surfaces 23, and therefore a connection area between the first electrode terminal 30 and the second electrode terminal can be increased, thereby improving the connection strength.

Under a condition that the plurality of battery cells 6 are arranged, some of the battery cells 6 may need to be flipped over, so that a recess 25 and a second electrode terminal of a battery cell 6 adjacent to the recess 25 correspond to each other. In the embodiment, the recess 25 penetrates through the housing 20 along the second direction Y, and under a condition that the battery cell 6 is flipped over, the external device can still extend into the recess 25, thereby improving applicability of the external device.

In the embodiment, a size of the recess 25 can be further increased, so that the recess 25 may further be configured to accommodate other components of the battery, such as a sampling component, a cooling components, and the like.

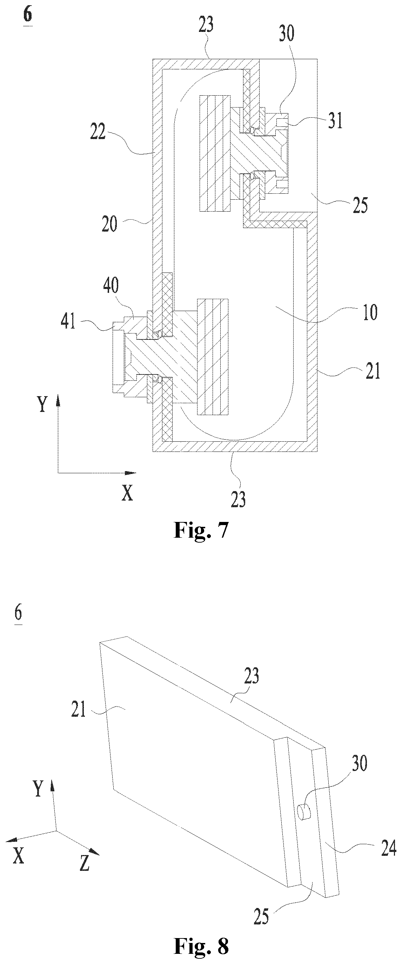

Fig. 7 is a schematic cross-sectional view of a battery cell according to yet some other embodiments of the present application.

As shown in Fig. 7, in some embodiments, the first electrode terminal 31 is provided with a first fit portion 31, and the second electrode terminal 40 is provided with a second fit portion 41. Under a condition that the plurality of battery cells 6 are arranged along the first direction X,

the first electrode terminal 30 and the second electrode terminal 40 accommodated within the recess 25 are connected by a concave-convex fit of the first fit portion 31 and the second fit portion 41.

In some examples, the first fit portion 31 is a convex structure, and the second fit portion 41 is a concave structure; and in other examples, the first fit portion 31 is a concave structure, and the second fit portion 41 is a convex structure. In yet some other examples, the first fit portion 31 and the second fit portion 41 are both tooth-shaped structures, which may be engaged with each other.

In the embodiment, the first fit portion 31 and the second fit portion 41 are provided, so that it is possible to increase a contact area between the first electrode terminal 30 and the second electrode terminal 40 accommodated within the recess 25, thereby improving a conveyance capacity and the connection strength between the first electrode terminal 30 and the second electrode terminal 40.

In the embodiment, the concave convex fit of the first fit portion 31 and the second fit portion 41 can further have a positioning function, facilitating assembling and positioning of two battery cells 6.

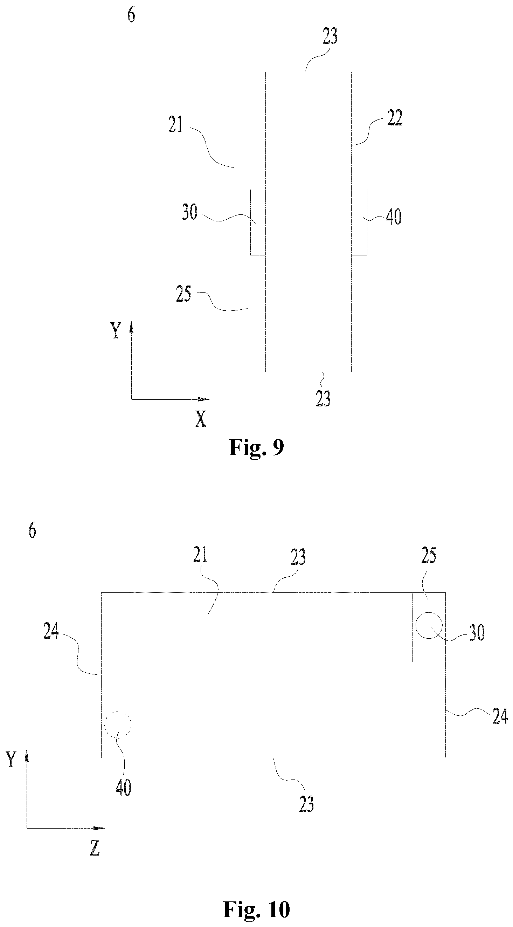

Fig. 8 is a schematic perspective view of a battery cell according to yet some other embodiments of the present application; Fig. 9 is a schematic side view of a battery cell shown in Fig. 8.

As shown in Fig. 8 and Fig. 9, in some embodiments, the first electrode terminal 30 and the second electrode terminal 40 are correspondingly arranged along the first direction X.

In the embodiment, the projection of the first electrode terminal 30 along the first direction X partially overlaps with the projection of the second electrode terminal 40 along the first direction X.

In the embodiment, under a condition that the plurality of battery cells 6 are arranged along the first direction X, the first electrode terminal 30 and the second electrode terminal 40 of adjacent battery cells 6 may abut against each other without flipping the battery cells 6 over, thereby simplifying the assembling process.

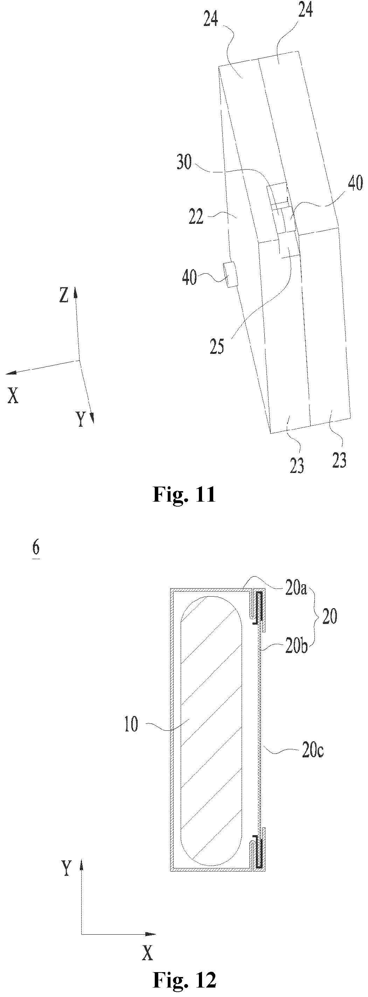

Fig. 10 is a schematic front view of a battery cell according to some other embodiments of the present application; Fig. 11 is a schematic perspective view of two battery cells after assembly shown in Fig. 10.

As shown in Fig. 10 and Fig. 11, in some embodiments, the projection of the first electrode terminal 30 along the first direction X and the projection of the second electrode terminal 40 along the first direction X are arranged along a diagonal direction of a projection of the housing 20 along the first direction X.

In the above description, the projection of the first electrode terminal 30, the projection of the second electrode terminal 40 and the projection of the housing 20 are projections within a same plane perpendicular to the first direction X.

In the embodiment, the first electrode terminal

30 and the second electrode terminal 40 are arranged diagonally on the housing 20, and under a condition that the battery cell 6 is rotated by 180° around an axis parallel to the first direction X, the recess 25 of the battery cell 6 may be opposite to the second electrode terminal 40 of the adjacent battery cell 6.

In some embodiments, the outer surface of the housing 20 further includes two fourth surfaces 24 oppositely arranged along a third direction Z, and the first direction X, the second direction Y, and the third direction Z are perpendicular to each other. One end of the recess 25 along the third direction Z extends to the fourth surface 24.

In an example, the fourth surface 24 is a plane perpendicular to the third direction Z.

In the embodiment, the recess 25 forms the opening on the fourth surface 24, so that an external device (for example, a welding device) may be connected to the first electrode terminal 30 and the second electrode terminal 40 via the opening on the fourth surface 24, and therefore a connection area between the first electrode terminal 30 and the second electrode terminal 40 can be increased, thereby improving the connection strength.

Fig. 12 is a schematic cross-sectional view of a battery cell shown in Fig. 3 along a direction B-B.

As shown in Fig. 12, the housing 20 includes a housing body 20a and an end cap 20b, an end portion of the housing body 20a along the first direction X has an opening 20c, and the end cap 20b covers the opening 20c. The first electrode terminal is installed on the end cap 20b, and the second electrode terminal is installed on the housing body 20a; or the first electrode terminal is installed on the housing body 20a, and the second electrode terminal is installed on the end cap 20b.

The housing body 20a is a hollow structure, and space for accommodating the electrode component 10 is formed within the housing body 20a. The shape of the housing body 20a may be determined according the specific shape of the electrode component 10. For example, under a condition that the electrode component 10 is a cylinder structure, the housing body 20a may be selected to be a cylindrical housing body 20a; under a condition that the electrode component 10 is a cuboid structure, the housing body 20a may be selected to be a cuboid housing body 20a.

The housing body 20a may be a structure with an opening on one side, and there is one end cap 20b covering the opening of the housing body 20a. Alternatively, the housing body 20a may be a structure with openings on two sides, and there are two end caps 20b covering two openings of the housing body 20a.

The end cap 20b may be connected to the housing body 20a by welding, adhering, snapping, die sealing, or other means.

In some examples, the first electrode terminal is installed on the end cap 20b, and the second electrode terminal is installed on a side plate of the housing body 20a opposite the end cap 20b along the first direction X. In other examples, the second electrode terminal is installed on the end cap 20b, and the first electrode terminal is installed on a side plate of the housing body 20a opposite the end cap 20b along the first direction X.

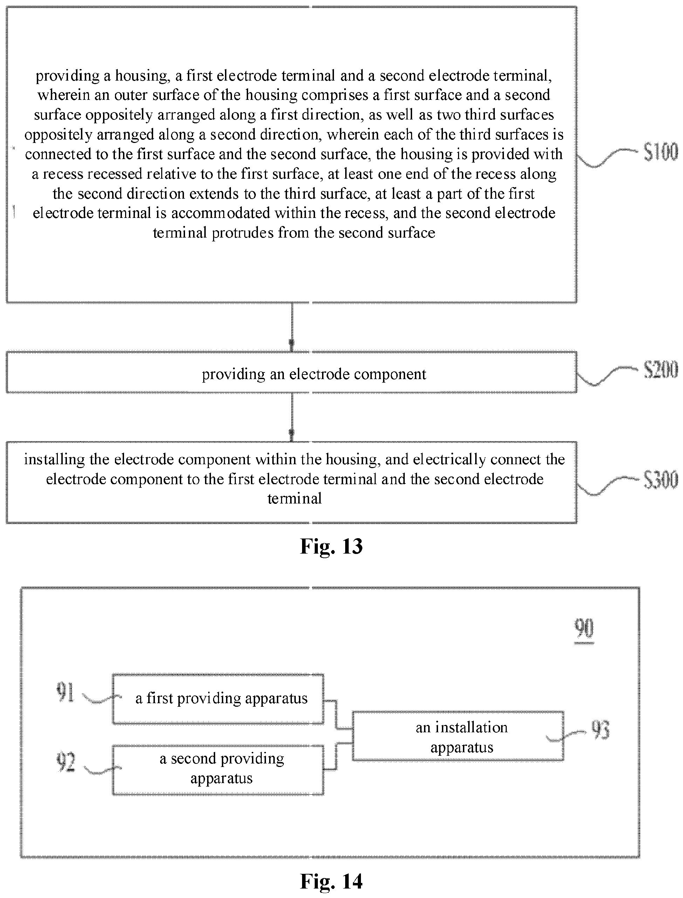

Fig. 13 is a schematic flowchart of a method for manufacturing a battery cell according to some embodiments of the present application.

As shown in Fig. 13, the method for manufacturing the battery cell according to the embodiments of the present application includes:

S100, providing a housing, a first electrode terminal and a second electrode terminal, wherein an outer surface of the housing includes a first surface and a second surface oppositely arranged along a first direction, and two third surfaces oppositely arranged along a second direction, wherein each of the third surfaces is connected to the first surface and the second surface, the housing is provided with a recess recessed relative to the first surface, at least one end of the recess along the second direction extends to the third surface, at least a part of the first electrode terminal is accommodated within the recess, and the second electrode terminal protrudes from the second surface;

S200, providing an electrode component;

S300, installing the electrode component into the housing, and electrically connecting the electrode component to the first electrode terminal and the second electrode terminal;

in which the first electrode terminal and the second electrode terminal have opposite polarities, and under a condition that a plurality of battery cells are arranged along the first direction, the recess of the battery cell is configured to accommodate at least a part of a second electrode terminal of an adjacent battery cell, so that the first electrode terminal and the second electrode terminal accommodated within the recess are electrically connected.

It should be noted that, for the structure of the battery cell manufactured by the above method, reference may be made to the battery cell provided in the above embodiments.

Under a condition that the battery cell is manufactured according to the above method, it is not necessary to carry out the steps in the above order, that is, the steps may be carried out in an order mentioned in the embodiments, or in an order different from that mentioned in the embodiments, or several steps may be performed simultaneously. For example, the execution of steps S100 and S200 is in no particular order, and may also be performed simultaneously.

Fig. 14 is a schematic block diagram of a system for manufacturing a battery cell according to some embodiments of the present application.

As shown in Fig. 14, a system 90 for manufacturing a battery cell according to the embodiments of the present application includes a first providing apparatus 91, a second providing apparatus 92, and an installation apparatus 93. The first providing apparatus 91 is configured to provide a housing, a first electrode terminal and a second electrode terminal, in which an outer surface of the housing includes a first surface and a second surface oppositely arranged along a first direction, and two third surfaces oppositely arranged along a second direction, in which each of the third surfaces is connected to the first surface and the second surface, the housing is provided with a recess recessed relative to the first surface, at least one end of the recess along the second direction extends to the third surface, at least a part of the first electrode terminal is accommodated within the recess, and the second electrode terminal protrudes from the second surface. The second providing apparatus 92 is configured to provide an electrode component. The installation apparatus 93 is configured to install the electrode component into the housing and electrically connect the electrode component to the first electrode terminal and the second electrode terminal. The first electrode terminal and the second electrode terminal have opposite polarities, and under a condition that a plurality of battery cells are arranged along the first direction, the recess of the battery cell is configured to accommodate at least a part of a second electrode terminal of an adjacent battery cell, so that the first electrode terminal and the second electrode terminal accommodated within the recess are electrically connected.

For a related structure of a battery cell manufactured by the above-mentioned system for manufacturing a battery cell, reference may be made to the battery cell provided in the above-mentioned embodiments.

It should be noted that the embodiments in the present application and the features of the embodiments may be combined with each other in the case of no conflict.

Finally, it should be noted that: the above embodiments are only for illustrating technical solutions of the present application, rather than for limiting; although the present application has been described in detail with reference to the foregoing embodiments, those of ordinary skill in the art should understand: it is still possible to modify the technical solutions recited in the foregoing embodiments, or perform equivalent replacements to some of the technical features thereof, however, these modifications or replacements do not make an essence of the corresponding technical solutions deviate from the scope of the technical solutions of the embodiments of the present application.

**Claims**

**1.** A battery cell (6), comprising:

a housing (20), wherein an outer surface of the housing (20) comprises a first surface (21) and a second surface (22) oppositely arranged along a first direction (X), and two third surfaces (23) oppositely arranged along a second direction (Y), wherein each of the third surfaces (23) is connected to the first surface (21) and the second surface (22), the housing (20) is provided with a recess (25) recessed relative to the first surface (21), and at least one end of the recess (25) along the second direction (Y) extends to the third surface (23) to form an opening on the third surface (23);

an electrode component (10) accommodated within the housing (20);

a first electrode terminal (30) configured to be electrically connected to the electrode component (10), wherein at least a part of the first electrode terminal (30) is accommodated within the recess (25); and

a second electrode terminal (40) configured to be electrically connected to the electrode component (10) and protruding from the second surface (22), wherein the first electrode terminal (30) and the second electrode terminal (40) have opposite polarities;

wherein under a condition that a plurality of battery cells (6) are arranged along the first direction (X), the recess (25) of the battery cell (6) is configured to accommodate at least a part of a second electrode terminal (40) of an adjacent battery cell (6), so that the first electrode terminal (30) and the second electrode terminal (40) accommodated within the recess (25) are electrically connected;

wherein the first electrode terminal (30) and the second electrode terminal (40) accommodated within the recess (25) are weldable to each other.

**2.** The battery cell (6) according to claim 1, wherein two ends of the recess (25) along the second direction (Y) extend to the two third surfaces (23) respectively.

**3.** The battery cell (6) according to claim 1 or 2, wherein along the first direction (X), a size of a part of the first electrode terminal (30) protruding from a bottom surface of the recess (25) is L1, a size of a part of the second electrode terminal (40) protruding from the second surface (22) is L2, and a depth of the recess (25) is H, wherein L1, L2, and H satisfy:

$$H \le L1 + L2.$$

**4.** The battery cell (6) according to any of claims 1 to 3, wherein the first electrode terminal (30) is provided with a first fit portion (31), and the second electrode terminal (40) is provided with a second fit portion (41);

under a condition that the plurality of battery cells (6) are arranged along the first direction (X), the first electrode terminal (30) and the second electrode terminal (40) accommodated within the recess (25) are connected by a concave-convex fit of the first fit portion (31) and the second fit portion (41).

5. The battery cell (6) according to any of claims 1 to 4, wherein an area of the first surface (21) is the same as an area of the second surface (22), and the first surface (21) and the second surface (22) are surfaces having a largest area among all surfaces of the housing (20).

6. The battery cell (6) according to any of claims 1 to 5, wherein a part of the first electrode terminal (30) positioned outside the housing (20) is completely accommodated within the recess (25).

7. The battery cell (6) according to any of claims 1 to 6, wherein the first electrode terminal (30) and the second electrode terminal (40) are correspondingly arranged along the first direction (X).

8. The battery cell (6) according to any of claims 1 to 6, wherein a projection of the first electrode terminal (30) along the first direction (X) does not overlap with a projection of the second electrode terminal (40) along the first direction (X).

9. The battery cell (6) according to claim 8, wherein the projection of the first electrode terminal (30) along the first direction (X) and the projection of the second electrode terminal (40) along the first direction (X) are arranged along a diagonal direction of a projection of the housing (20) along the first direction (X); or

    wherein the projection of the first electrode terminal (30) along the first direction (X) and the projection of the second electrode terminal (40) along the first direction (X) are spaced apart along the second direction (Y); and, wherein preferably, the first electrode terminal (30) and the second electrode terminal (40) are installed in a middle region of the housing (20) along a third direction (Z), and the first direction (X), the second direction (Y), and the third direction (Z) are perpendicular to each other.

10. The battery cell (6) according to any of claims 1 to 9, wherein the outer surface of the housing (20) further comprises two fourth surfaces (24) oppositely arranged along a third direction (Z), and the first direction (X), the second direction (Y), and the third direction (Z) are perpendicular to each other; one end of the recess (25) along the third direction (Z) extends to the fourth surface (24).

11. The battery cell (6) according to any of claims 1 to 10, wherein the housing (20) comprises a housing body (20a) and an end cap (20b), wherein an end portion of the housing body (20a) along the first direction (X) has an opening (20c), and the end cap (20b) covers the opening (20c); the first electrode terminal (30) is installed on the end cap (20b), and the second electrode terminal (40) is installed on the housing body (20a); or the first electrode terminal (30) is installed on the housing body (20a), and the second electrode terminal (40) is installed on the end cap (20b).

12. A battery (2) comprising a plurality of battery cells (6) according to any of claims 1 to 11;

    wherein the plurality of battery cells (6) are arranged along the first direction (X), the recess (25) of the battery cell (6) is configured to accommodate at least a part of a second electrode terminal (40) of an adjacent battery cell (6), so that the first electrode terminal (30) and the second electrode terminal (40) accommodated within the recess (25) are electrically connected; and, wherein the first electrode terminal (30) and the second electrode terminal (40) accommodated within the recess (25) are welded to each other.

13. An electrical apparatus comprising the battery cell (6) according to any of claims 1 to 11, wherein the battery cell (6) is configured to provide electrical power.

14. A method for manufacturing a battery cell (6) according to any of claims 1 to 11, comprising:

    providing (S100) a housing (20), a first electrode terminal (30) and a second electrode terminal (40), wherein an outer surface of the housing (20) comprises a first surface (21) and a second surface (22) oppositely arranged along a first direction (X), and two third surfaces (23) oppositely arranged along a second direction (Y), wherein each of the third surfaces (23) is connected to the first surface (21) and the second surface (22), the housing (20) is provided with a recess (25) recessed relative to the first surface (21), at least one end of the recess (25) along the second direction (Y) extends to the third surface (23) to form an opening on the third surface (23), at least a part of the first electrode terminal (30) is accommodated within the recess (25), the second electrode terminal (40) protrudes from the second surface (22), and the first electrode terminal (30) and the second electrode terminal (40) are weldable to each other; providing (S200) an electrode component (10);

and

installing (S300) the electrode component (10) into the housing (20), and electrically connecting the electrode component (10) to the first electrode terminal (30) and the second electrode terminal (40);

wherein the first electrode terminal (30) and the second electrode terminal (40) have opposite polarities, and under a condition that a plurality of battery cells (6) are arranged along the first direction (X), the recess (25) of the battery cell (6) is configured to accommodate at least a part of a second electrode terminal (40) of an adjacent battery cell (6), so that the first electrode terminal (30) and the second electrode terminal (40) accommodated within the recess (25) are electrically connected.

15. A system (90) for manufacturing a battery cell (6) according to any of claims 1 to 11, comprising:

a first providing apparatus (91) configured to provide a housing (20), a first electrode terminal (30) and a second electrode terminal (40), wherein an outer surface of the housing (20) comprises a first surface (21) and a second surface (22) oppositely arranged along a first direction (X), and two third surfaces (23) oppositely arranged along a second direction (Y), wherein each of the third surfaces (23) is connected to the first surface (21) and the second surface (22), the housing (20) is provided with a recess (25) recessed relative to the first surface (21), at least one end of the recess (25) along the second direction (Y) extends to the third surface (23) to form an opening on the third surface (23), at least a part of the first electrode terminal (30) is accommodated within the recess (25), the second electrode terminal (40) protrudes from the second surface (22), and the first electrode terminal (30) and the second electrode terminal (40) are weldable to each other; a second providing apparatus (92) configured to provide an electrode component (10); an installation apparatus (93) configured to install the electrode component (10) into the housing (20), and electrically connect the electrode component (10) to the first electrode terminal (30) and the second electrode terminal (40); and wherein the first electrode terminal (30) and the second electrode terminal (40) have opposite polarities, and under a condition that a plurality of battery cells (6) are arranged along the first direction (X), the recess (25) of the battery cell (6) is configured to accommodate at least a part of a second electrode terminal (40) of an adjacent battery cell (6), so that the first electrode terminal (30) and the second electrode terminal

(40) accommodated within the recess (25) are electrically connected.

**Patentansprüche**

1. Batteriezelle (6), umfassend:

ein Gehäuse (20), wobei eine Außenfläche des Gehäuses (20) eine erste Oberfläche (21) und eine zweite Oberfläche (22), die entlang einer ersten Richtung (X) gegenüberliegend angeordnet sind, und zwei dritte Oberflächen (23) umfasst, die entlang einer zweiten Richtung (Y) gegenüberliegend angeordnet sind, wobei jede der dritten Oberflächen (23) mit der ersten Oberfläche (21) und der zweiten Oberfläche (22) verbunden ist, wobei das Gehäuse (20) mit einer relativ zur ersten Oberfläche (21) vertieften Aussparung (25) versehen ist und sich mindestens ein Ende der Aussparung (25) entlang der zweiten Richtung (Y) zur dritten Oberfläche (23) erstreckt, um eine Öffnung an der dritten Oberfläche (23) zu bilden; eine Elektrodenkomponente (10), die in dem Gehäuse (20) aufgenommen ist; einen ersten Elektrodenanschluss (30), der so konfiguriert ist, dass er elektrisch mit der Elektrodenkomponente (10) verbunden ist, wobei zumindest ein Teil des ersten Elektrodenanschlusses (30) in der Aussparung (25) aufgenommen ist; und einen zweiten Elektrodenanschluss (40), der so konfiguriert ist, dass er elektrisch mit der Elektrodenkomponente (10) verbunden ist, und von der zweiten Oberfläche (22) vorsteht, wobei der erste Elektrodenanschluss (30) und der zweite Elektrodenanschluss (40) entgegengesetzte Polaritäten aufweisen; wobei, wenn eine Vielzahl von Batteriezellen (6) entlang der ersten Richtung (X) angeordnet ist, die Aussparung (25) der Batteriezelle (6) so konfiguriert ist, dass sie zumindest einen Teil eines zweiten Elektrodenanschlusses (40) einer benachbarten Batteriezelle (6) aufnimmt, sodass der erste Elektrodenanschluss (30) und der in der Aussparung (25) aufgenommene zweite Elektrodenanschluss (40) elektrisch verbunden sind; wobei der erste Elektrodenanschluss (30) und der in der Aussparung (25) aufgenommene zweite Elektrodenanschluss (40) miteinander verschweißbar sind.

2. Batteriezelle (6) nach Anspruch 1, wobei sich zwei Enden der Aussparung (25) entlang der zweiten Richtung (Y) jeweils zu den beiden dritten Oberflächen (23) erstrecken.

**3.** Batteriezelle (6) nach Anspruch 1 oder 2, wobei entlang der ersten Richtung (X) eine Größe eines Teils des ersten Elektrodenanschlusses (30), der von einer Bodenfläche der Aussparung (25) vorsteht, L1 ist, eine Größe eines Teils des zweiten Elektrodenanschlusses (40), der von der zweiten Oberfläche (22) vorsteht, L2 ist und eine Tiefe der Aussparung (25) H ist, wobei L1, L2 und H Folgendes erfüllen:

$$H \leq L1 + L2.$$

**4.** Batteriezelle (6) nach einem der Ansprüche 1 bis 3, wobei der erste Elektrodenanschluss (30) mit einem ersten Passabschnitt (31) versehen ist und der zweite Elektrodenanschluss (40) mit einem zweiten Passabschnitt (41) versehen ist; wenn die Vielzahl von Batteriezellen (6) entlang der ersten Richtung (X) angeordnet ist, der erste Elektrodenanschluss (30) und der in der Aussparung (25) aufgenommene zweite Elektrodenanschluss (40) durch eine Konkav-Konvex-Passung des ersten Passabschnitts (31) und des zweiten Passabschnitts (41) verbunden sind.

**5.** Batteriezelle (6) nach einem der Ansprüche 1 bis 4, wobei eine Fläche der ersten Oberfläche (21) gleich einer Fläche der zweiten Oberfläche (22) ist und die erste Oberfläche (21) und die zweite Oberfläche (22) Oberflächen mit einer größten Fläche unter allen Oberflächen des Gehäuses (20) sind.

**6.** Batteriezelle (6) nach einem der Ansprüche 1 bis 5, wobei ein Teil des ersten Elektrodenanschlusses (30), der außerhalb des Gehäuses (20) positioniert ist, vollständig in der Aussparung (25) aufgenommen ist.

**7.** Batteriezelle (6) nach einem der Ansprüche 1 bis 6, wobei der erste Elektrodenanschluss (30) und der zweite Elektrodenanschluss (40) entsprechend entlang der ersten Richtung (X) angeordnet sind.

**8.** Batteriezelle (6) nach einem der Ansprüche 1 bis 6, wobei sich eine Projektion des ersten Elektrodenanschlusses (30) entlang der ersten Richtung (X) nicht mit einer Projektion des zweiten Elektrodenanschlusses (40) entlang der ersten Richtung (X) überlappt.

**9.** Batteriezelle (6) nach Anspruch 8, wobei die Projektion des ersten Elektrodenanschlusses (30) entlang der ersten Richtung (X) und die Projektion des zweiten Elektrodenanschlusses (40) entlang der ersten Richtung (X) entlang einer diagonalen Richtung einer Projektion des Gehäuses (20) entlang der ersten Richtung (X) angeordnet sind;

oder

wobei die Projektion des ersten Elektrodenanschlusses (30) entlang der ersten Richtung (X) und die Projektion des zweiten Elektrodenanschlusses (40) entlang der ersten Richtung (X) entlang der zweiten Richtung (Y) zueinander beabstandet sind; und wobei bevorzugt der erste Elektrodenanschluss (30) und der zweite Elektrodenanschluss (40) in einem mittleren Bereich des Gehäuses (20) entlang einer dritten Richtung (Z) installiert sind und die erste Richtung (X), die zweite Richtung (Y) und die dritte Richtung (Z) senkrecht zueinander stehen.

**10.** Batteriezelle (6) nach einem der Ansprüche 1 bis 9, wobei die Außenfläche des Gehäuses (20) ferner zwei vierte Oberflächen (24) umfasst, die entlang einer dritten Richtung (Z) gegenüberliegend angeordnet sind, und wobei die erste Richtung (X), die zweite Richtung (Y) und die dritte Richtung (Z) senkrecht zueinander stehen; sich ein Ende der Aussparung (25) entlang der dritten Richtung (Z) zur vierten Oberfläche (24) erstreckt.

**11.** Batteriezelle (6) nach einem der Ansprüche 1 bis 10, wobei das Gehäuse (20) einen Gehäusekörper (20a) und eine Endkappe (20b) umfasst, wobei ein Endabschnitt des Gehäusekörpers (20a) entlang der ersten Richtung (X) eine Öffnung (20c) aufweist und die Endkappe (20b) die Öffnung (20c) abdeckt; der erste Elektrodenanschluss (30) an der Endkappe (20b) installiert ist und der zweite Elektrodenanschluss (40) am Gehäusekörper (20a) installiert ist; oder der erste Elektrodenanschluss (30) am Gehäusekörper (20a) installiert ist und der zweite Elektrodenanschluss (40) an der Endkappe (20b) installiert ist.

**12.** Batterie (2), umfassend eine Vielzahl von Batteriezellen (6) nach einem der Ansprüche 1 bis 11;

wobei die Vielzahl von Batteriezellen (6) entlang der ersten Richtung (X) angeordnet ist, die Aussparung (25) der Batteriezelle (6) so konfiguriert ist, dass sie zumindest einen Teil eines zweiten Elektrodenanschlusses (40) einer benachbarten Batteriezelle (6) aufnimmt, sodass der erste Elektrodenanschluss (30) und der in der Aussparung (25) aufgenommene zweite Elektrodenanschluss (40) elektrisch verbunden sind; und wobei der erste Elektrodenanschluss (30) und der in der Aussparung (25) aufgenommene zweite Elektrodenanschluss (40) miteinander verschweißt sind.

**13.** Elektrische Einrichtung, umfassend die Batteriezelle (6) nach einem der Ansprüche 1 bis 11, wobei die Batteriezelle (6) so konfiguriert ist, dass sie elektrische Leistung liefert.

**14.** Verfahren zum Herstellen einer Batteriezelle (6) nach einem der Ansprüche 1 bis 11, umfassend:

Bereitstellen (S100) eines Gehäuses (20), eines ersten Elektrodenanschlusses (30) und eines zweiten Elektrodenanschlusses (40), wobei eine Außenfläche des Gehäuses (20) eine erste Oberfläche (21) und eine zweite Oberfläche (22), die entlang einer ersten Richtung (X) gegenüberliegend angeordnet sind, und zwei dritte Oberflächen (23) umfasst, die entlang einer zweiten Richtung (Y) gegenüberliegend angeordnet sind, wobei jede der dritten Oberflächen (23) mit der ersten Oberfläche (21) und der zweiten Oberfläche (22) verbunden ist, das Gehäuse (20) mit einer relativ zur ersten Oberfläche (21) vertieften Aussparung (25) versehen ist, sich mindestens ein Ende der Aussparung (25) entlang der zweiten Richtung (Y) zur dritten Oberfläche (23) erstreckt, um eine Öffnung an der dritten Oberfläche (23) zu bilden, zumindest ein Teil des ersten Elektrodenanschlusses (30) in der Aussparung (25) aufgenommen ist, der zweite Elektrodenanschluss (40) von der zweiten Oberfläche (22) vorsteht und der erste Elektrodenanschluss (30) und der zweite Elektrodenanschluss (40) miteinander verschweißbar sind;
Bereitstellen (S200) einer Elektrodenkomponente (10); und
Installieren (S300) der Elektrodenkomponente (10) in dem Gehäuse (20) und elektrisches Verbinden der Elektrodenkomponente (10) mit dem ersten Elektrodenanschluss (30) und dem zweiten Elektrodenanschluss (40);
wobei der erste Elektrodenanschluss (30) und der zweite Elektrodenanschluss (40) entgegengesetzte Polaritäten aufweisen und, wenn eine Vielzahl von Batteriezellen (6) entlang der ersten Richtung (X) angeordnet ist, die Aussparung (25) der Batteriezelle (6) so konfiguriert ist, dass sie zumindest einen Teil eines zweiten Elektrodenanschlusses (40) einer benachbarten Batteriezelle (6) aufnimmt, sodass der erste Elektrodenanschluss (30) und der in der Aussparung (25) aufgenommene zweite Elektrodenanschluss (40) elektrisch verbunden sind.

**15.** System (90) zum Herstellen einer Batteriezelle (6) nach einem der Ansprüche 1 bis 11, umfassend:

eine erste Bereitstellungseinrichtung (91), die so konfiguriert ist, dass sie ein Gehäuse (20), einen ersten Elektrodenanschluss (30) und einen zweiten Elektrodenanschluss (40) bereitstellt, wobei eine Außenfläche des Gehäuses (20) eine erste Oberfläche (21) und eine zweite Oberfläche (22), die entlang einer ersten Richtung (X) gegenüberliegend angeordnet sind, und zwei dritte Oberflächen (23) umfasst, die entlang einer zweiten Richtung (Y) gegenüberliegend angeordnet sind, wobei jede der dritten Oberflächen (23) mit der ersten Oberfläche (21) und der zweiten Oberfläche (22) verbunden ist, das Gehäuse (20) mit einer relativ zur ersten Oberfläche (21) vertieften Aussparung (25) versehen ist, sich mindestens ein Ende der Aussparung (25) entlang der zweiten Richtung (Y) zur dritten Oberfläche (23) erstreckt, um eine Öffnung an der dritten Oberfläche (23) zu bilden, zumindest ein Teil des ersten Elektrodenanschlusses (30) in der Aussparung (25) aufgenommen ist, der zweite Elektrodenanschluss (40) von der zweiten Oberfläche (22) vorsteht und der erste Elektrodenanschluss (30) und der zweite Elektrodenanschluss (40) miteinander verschweißbar sind;
eine zweite Bereitstellungseinrichtung (92), die so konfiguriert ist, dass sie eine Elektrodenkomponente (10) bereitstellt;
eine Installationseinrichtung (93), die so konfiguriert ist, dass sie die Elektrodenkomponente (10) in dem Gehäuse (20) installiert und die Elektrodenkomponente (10) mit dem ersten Elektrodenanschluss (30) und dem zweiten Elektrodenanschluss (40) elektrisch verbindet; und
wobei der erste Elektrodenanschluss (30) und der zweite Elektrodenanschluss (40) entgegengesetzte Polaritäten aufweisen und, wenn eine Vielzahl von Batteriezellen (6) entlang der ersten Richtung (X) angeordnet ist, die Aussparung (25) der Batteriezelle (6) so konfiguriert ist, dass sie zumindest einen Teil eines zweiten Elektrodenanschlusses (40) einer benachbarten Batteriezelle (6) aufnimmt, sodass der erste Elektrodenanschluss (30) und der in der Aussparung (25) aufgenommene zweite Elektrodenanschluss (40) elektrisch verbunden sind.

**Revendications**

**1.** Élément de batterie (6), comprenant :

un boîtier (20), dans lequel une surface extérieure du boîtier (20) comprend une première surface (21) et une deuxième surface (22) disposées de manière opposée dans une première direction (X), et deux troisièmes surfaces (23) disposées de manière opposée dans une seconde direction (Y), chacune des troisièmes surfaces (23) étant reliée à la première surface (21) et à la deuxième surface (22), le boîtier (20) étant pourvu d'un évidement (25) en retrait par rapport à la première surface (21), et au moins une extrémité de l'évidement (25) dans la deuxième direction (Y) s'étend vers la troisième surface (23) pour former une ouverture sur la troisième surface (23) ;

un composant d'électrode (10) reçu dans le boîtier (20) ;

une première borne d'électrode (30) configurée pour être connectée électriquement au composant d'électrode (10), dans lequel au moins une partie de la première borne d'électrode (30) est reçue à l'intérieur de l'évidement (25) ; et

une seconde borne d'électrode (40) configurée pour être connectée électriquement au composant d'électrode (10) et faisant saillie depuis la deuxième surface (22), la première borne d'électrode (30) et la seconde borne d'électrode (40) présentant des polarités opposées ;

dans lequel à condition qu'une pluralité d'éléments (6) de batterie soient disposés dans la première direction (X), l'évidement (25) de l'élément de batterie (6) est configuré pour recevoir au moins une partie d'une seconde borne d'électrode (40) d'un élément de batterie (6) adjacent, de sorte que la première borne d'électrode (30) et la seconde borne d'électrode (40) reçue dans l'évidement (25) sont connectées électriquement ;

dans lequel la première borne d'électrode (30) et la seconde borne d'électrode (40) reçue dans l'évidement (25) peuvent être soudées l'une à l'autre.

2. Élément de batterie (6) selon la revendication 1, dans lequel deux extrémités de l'évidement (25) dans la deuxième direction (Y) s'étendent respectivement vers les deux troisièmes surfaces (23).

3. Élément de batterie (6) selon la revendication 1 ou 2, dans lequel, dans la première direction (X), une taille d'une partie de la première borne d'électrode (30) faisant saillie à partir d'une surface inférieure de l'évidement (25) est L1, une taille d'une partie de la seconde borne d'électrode (40) faisant saillie à partir de la deuxième surface (22) est L2, et une profondeur de l'évidement (25) est H, où L1, L2 et H satisfont :

$$H \leq L1 + L2.$$

4. Élément de batterie (6) selon l'une quelconque des revendications 1 à 3, dans lequel la première borne d'électrode (30) est pourvue d'une première partie d'ajustement (31), et la seconde borne d'électrode (40) est pourvue d'une seconde partie d'ajustement (41) ;

lorsque la pluralité d'éléments de batterie (6) est disposée dans la première direction (X), la première borne d'électrode (30) et la seconde borne d'électrode (40) reçue dans l'évidement (25) sont connectées par un ajustement concave-convexe de la première partie d'ajustement (31) et de la seconde partie d'ajustement (41).

5. Élément de batterie (6) selon l'une quelconque des revendications 1 à 4, dans lequel une aire de la première surface (21) est la même qu'une aire de la deuxième surface (22), et la première surface (21) et la deuxième surface (22) sont des surfaces ayant une aire la plus grande parmi toutes les surfaces du boîtier (20).

6. Élément de batterie (6) selon l'une quelconque des revendications 1 à 5, dans lequel une partie de la première borne d'électrode (30) positionnée à l'extérieur du boîtier (20) est complètement reçue à l'intérieur de l'évidement (25).

7. Élément de batterie (6) selon l'une quelconque des revendications 1 à 6, dans lequel la première borne d'électrode (30) et la seconde borne d'électrode (40) sont disposées de manière correspondante dans la première direction (X).

8. Élément de batterie (6) selon l'une quelconque des revendications 1 à 6, dans lequel une projection de la première borne d'électrode (30) dans la première direction (X) ne chevauche pas une projection de la seconde borne d'électrode (40) dans la première direction (X).

9. Élément de batterie (6) selon la revendication 8, dans lequel la projection de la première borne d'électrode (30) dans la première direction (X) et la projection de la seconde borne d'électrode (40) dans la première direction (X) sont disposées suivant une direction diagonale d'une projection du boîtier (20) dans la première direction (X) ; ou

dans lequel la projection de la première borne d'électrode (30) dans la première direction (X) et la projection de la seconde borne d'électrode (40) dans la première direction (X) sont espacées suivant la deuxième direction (Y) ; et, la première borne d'électrode (30) et la seconde borne d'électrode (40) sont de préférence installées dans une région centrale du boîtier (20) dans une troisième direction (Z), et la première direction (X), la deuxième direction (Y) et la troisième direction (Z) sont perpendiculaires l'une à l'autre.

**10.** Élément de batterie (6) selon l'une quelconque des revendications 1 à 9, dans lequel la surface extérieure du boîtier (20) comprend en outre deux quatrièmes surfaces (24) disposées de façon opposée dans une troisième direction (Z), et la première direction (X), la deuxième direction (Y), et la troisième direction (Z) sont perpendiculaires l'une à l'autre ; une extrémité de l'évidement (25) dans la troisième direction (Z) s'étend jusqu'à la quatrième surface (24).

**11.** Élément de batterie (6) selon l'une quelconque des revendications 1 à 10, dans lequel le boîtier (20) comprend un corps de boîtier (20a) et un capuchon d'extrémité (20b), dans lequel une partie d'extrémité du corps de boîtier (20a) dans la première direction (X) présente une ouverture (20c), et le capuchon d'extrémité (20b) recouvre l'ouverture (20c) ; la première borne d'électrode (30) est installée sur le capuchon d'extrémité (20b), et la seconde borne d'électrode (40) est installée sur le corps de boîtier (20a) ; ou la première borne d'électrode (30) est installée sur le corps de boîtier (20a), et la seconde borne d'électrode (40) est installée sur le capuchon d'extrémité (20b).

**12.** Batterie (2) comprenant une pluralité d'éléments de batterie (6) selon l'une quelconque des revendications 1 à 11 ;

dans laquelle la pluralité d'éléments de batterie (6) sont disposés dans la première direction (X), l'évidement (25) de l'élément de batterie (6) est configuré pour recevoir au moins une partie d'une seconde borne d'électrode (40) d'un élément de batterie (6) adjacent, de sorte que la première borne d'électrode (30) et la seconde borne d'électrode (40) reçue dans l'évidement (25) sont connectées électriquement ; et, dans laquelle la première borne d'électrode (30) et la deuxième borne d'électrode (40) reçue dans l'évidement (25) sont soudées l'une à l'autre.

**13.** Appareil électrique comprenant l'élément de batterie (6) selon l'une quelconque des revendications 1 à 11, dans lequel l'élément de batterie (6) est configuré pour fournir de l'énergie électrique.

**14.** Procédé de fabrication d'un élément de batterie (6) selon l'une quelconque des revendications 1 à 11, comprenant :

la fourniture (S100) d'un boîtier (20), d'une première borne d'électrode (30) et d'une seconde borne d'électrode (40), dans lequel une surface extérieure du boîtier (20) comprend une première surface (21) et une deuxième surface (22) disposées de manière opposée dans une première direction (X), et deux troisièmes surfaces (23) disposées de manière opposée dans une seconde direction (Y), chacune des troisièmes surfaces (23) étant reliée à la première surface (21) et à la deuxième surface (22), le boîtier (20) étant pourvu d'un évidement (25) en retrait par rapport à la première surface (21), au moins une extrémité de l'évidement (25) dans la deuxième direction (Y) s'étendant jusqu'à la troisième surface (23) pour former une ouverture sur la troisième surface (23), au moins une partie de la première borne d'électrode (30) étant reçue dans l'évidement (25), la seconde borne d'électrode (40) faisant saillie depuis la deuxième surface (22), et la première borne d'électrode (30) et la seconde borne d'électrode (40) pouvant être soudées l'une à l'autre ; la fourniture (S200) d'un composant d'électrode (10) ; et l'installation (S300) du composant d'électrode (10) dans le boîtier (20), et la connexion électrique du composant d'électrode (10) à la première borne d'électrode (30) et à la seconde borne d'électrode (40) ; dans lequel la première borne d'électrode (30) et la seconde borne d'électrode (40) présentent des polarités opposées, et à condition qu'une pluralité d'éléments de batterie (6) soient disposés dans la première direction (X), l'évidement (25) de l'élément de batterie (6) est configuré pour recevoir au moins une partie d'une seconde borne d'électrode (40) d'un élément de batterie (6) adjacent, de sorte que la première borne d'électrode (30) et la seconde borne d'électrode (40) reçue dans l'évidement (25) sont connectées électriquement.

**15.** Système (90) de fabrication d'un élément de batterie (6) selon l'une quelconque des revendications 1 à 11, comprenant :

un premier appareil de fourniture (91) configuré pour fournir un boîtier (20), d'une première borne d'électrode (30) et d'une seconde borne d'électrode (40), dans lequel une surface extérieure du boîtier (20) comprend une première surface (21) et une deuxième surface (22) disposées de manière opposée dans une première direction (X), et deux troisièmes surfaces (23) disposées de manière opposée dans une seconde direction (Y), chacune des troisièmes surfaces (23) étant reliée à la première surface (21) et à la deuxième surface (22), le boîtier (20) étant pourvu d'un évidement (25) en retrait par rapport à la première surface (21), au moins une extrémité de l'évidement (25) dans la deuxième direction (Y) s'étendant jusqu'à la troisième surface (23) pour former une ouverture sur la troisième surface (23), au moins une partie de la première borne d'électrode (30) étant reçue dans l'évidement (25), la seconde borne d'électrode (40) faisant saillie depuis la deuxième surface (22), et la première borne d'électrode (30) et la seconde borne d'électrode (40) pouvant être soudées l'une à l'autre ;

un second appareil de fourniture (92) configuré pour fournir un composant d'électrode (10) ;

un appareil d'installation (93) configuré pour installer le composant d'électrode (10) dans le boîtier (20), et connecter électriquement le composant d'électrode (10) à la première borne d'électrode (30) et à la seconde borne d'électrode (40) ; et

dans lequel la première borne d'électrode (30) et la seconde borne d'électrode (40) présentent des polarités opposées, et à condition qu'une pluralité d'éléments de batterie (6) soient disposés dans la première direction (X), l'évidement (25) de l'élément de batterie (6) est configuré pour recevoir au moins une partie d'une seconde borne d'électrode (40) d'un élément de batterie (6) adjacent, de sorte que la première borne d'électrode (30) et la seconde borne d'électrode (40) reçue dans l'évidement (25) sont connectées électriquement.

1

**Fig. 1**

2

**Fig. 2**

**Fig. 3**

**Fig. 4**

**Fig. 5**

**Fig. 6**

**Fig. 7**

**Fig. 8**

<u>6</u>

23

21

22

30

40

25

Y

X

**Fig. 9**

<u>6</u>

21    23    25

24

30

40

24

Y

Z

23

**Fig. 10**

Fig. 11

Fig. 12

providing a housing, a first electrode terminal and a second electrode terminal, wherein an outer surface of the housing comprises a first surface and a second surface oppositely arranged along a first direction, as well as two third surfaces oppositely arranged along a second direction, wherein each of the third surfaces is connected to the first surface and the second surface, the housing is provided with a recess recessed relative to the first surface, at least one end of the recess along the second direction extends to the third surface, at least a part of the first electrode terminal is accommodated within the recess, and the second electrode terminal protrudes from the second surface ⎫ S100

↓

providing an electrode component ⎫ S200

↓

installing the electrode component within the housing, and electrically connect the electrode component to the first electrode terminal and the second electrode terminal ⎫ S300

**Fig. 13**

90

91 — a first providing apparatus

92 — a second providing apparatus

an installation apparatus — 93

**Fig. 14**

**EP 4 407 757 B1**

**Patent documents cited in the description**

- DE 102013203097 A1